# EUROPEAN PATENT APPLICATION

(11) **EP 2 309 783 A1**
(43) Date of publication of application: **13.04.2011**
(21) Application number: 10187291.9
(22) Date of filing: 12.10.2010
(51) Int. Cl.: H04W 4/06, H04W 48/06

(54) **Network server, mobile communication terminal, and operating method thereof**

(30) Priority: 12.10.2009 KR 20090096559
(71) Applicant: Pantech Co., Ltd., Seoul 121-270 (KR)
(72) Inventor: Han, Kun Wook, 150-073, Seoul (KR); Kim, Tae Jong, 122-070, Seoul (KR)
(74) Representative: Herzog, Markus

(57) **Abstract**

A mobile communication terminal may include a reception unit to receive a message from a network server in accordance with an entrance of the mobile communication terminal to coverage area of a small-sized base station, a message definition unit to verify that an expiration time is included in the received message defining the message as a driving command message, and a terminal control unit to extract the expiration time from the defined driving command message and to drive a terminal timer to reduce the extracted expiration time.

## Description

### CROSS-REFERENCE TO RELATED APPLICATION

This application claims priority from and the benefit of Korean Patent Application No. 10-2009-0096559, filed on October 12, 2009, which is hereby incorporated by reference for all purposes as if fully set forth herein.

### BACKGROUND

1. FIELD

Exemplary embodiments of the present invention relate to a network server, a mobile communication terminal, and an operating method thereof.

2. DISCUSSION OF THE BACKGROUND

Femtocells and picocells may be indoor, low-powered small-sized base stations 15for use in a home or a small business. However, the femtocell may have more advanced functions compared to the picocell. By connecting a femtocell to a broadband router, the femtocell may be a small cellular base station and may enable voice and data transfer of 3^{rd} generation (3G) technology and 2^{nd} generation (2G) technology over a core network of a mobile communication company via a digital subscriber line (DSL) link and the like.

In this instance, the mobile communication company may provide data services using the femtocell that may enhance a coverage of a cell and improve quality of voice services so that subscribers may expect full adaptation to 3G.

In addition, a mobile communication terminal provided with data services without any restriction using the femtocell may be known as a permanent closed subscriber group (CSG) member, and a mobile communication terminal restrictively provided with data services using the femtocell for a certain period of time may be known as a temporary CSG member.

In a conventional network server, a timer concerning the temporary CSG member being different from the permanent CSG member may be driven, so that the temporary CSG member may be provided with the data services using the femtocell for the certain period of time (hereinafter, referred to as an "expiration time").

However, when the conventional network server manages the expiration time offered to all temporary CSG members, a network load may increase along with an increase in a number of the temporary CSG members. Accordingly, there is a demand for a method for managing the expiration time offered to the temporary CSG members.

### SUMMARY

Exemplary embodiments of the present invention provide a network server that may manage an expiration time of a mobile communication terminal via a server timer in the network server and a terminal timer in a mobile communication terminal, the mobile communication terminal being provided data services from a femtocell according to the expiration time.

Exemplary embodiments of the present invention provide a mobile communication terminal that may manage an expiration time by driving a terminal timer of the mobile communication terminal without a network server managing the expiration time if the expiration time is shorter than a reference value.

Exemplary embodiments of the present invention provide a mobile communication terminal that may drive a terminal timer of the mobile communication terminal to reduce the expiration time to be within a range if an expiration time exceeding a reference value is offered, and provide the reduced expiration time to a network server if the reduced expiration time is within the range.

Additional features of the invention will be set forth in the description which follows, and in part will be apparent from the description, or may be learned by practice of the invention.

An exemplary embodiment provides a network server, including: a verification unit to determine if a mobile communication terminal entering a coverage area of a small-sized base station is a temporary closed subscriber group (CSG) member, and to verify an expiration time offered to the mobile communication terminal if the mobile communication terminal is the temporary CSG member; a determination unit to compare the verified expiration time to a first threshold time value; and a message transmission unit to transmit, to the mobile communication terminal, a driving command message including the expiration time if the expiration time is less than the first threshold time value to drive a terminal timer of the mobile communication terminal to reduce the expiration time.

An exemplary embodiment provides a mobile communication terminal, including: a reception unit to receive a message from a network server in accordance with an entrance of the mobile communication terminal into a coverage area of a small-sized base station connected to the network server; a message definition unit to verify that an expiration time is included in the received message defining the message as a driving command message; and a terminal control unit to extract the expiration time from the defined driving command message, and to drive a terminal timer to reduce the extracted expiration time.

An exemplary embodiment provides a method for operating a network server, including: verifying if a mobile communication terminal entering a coverage area of a small-sized base station is a temporary closed subscribe group (CSG member), and verifying an expiration time offered to the mobile communication terminal if the mobile communication terminal is the temporary CSG member; determining the verified expiration time by comparing the verified expiration time with a first threshold time value; and transmitting, to the mobile communication terminal, a driving command message including the expiration time if the expiration time is less than the first threshold time value to drive a terminal timer of the mobile communication terminal to reduce the expiration time.

An exemplary embodiment provides a method for operating a mobile communication terminal, including: receiving a message from a network server in accordance with an entrance of the mobile communication terminal into a coverage area of a small-sized base station connected to the network server; verifying that an expiration time is included in the received message defining the received message as a driving command message; extracting the expiration time from the defined driving command message; and driving a terminal timer of the mobile communication terminal to reduce the extracted expiration time.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating connections between a network server and mobile communication terminals entering a coverage area of a femtocell according to exemplary embodiments of the present invention;

FIG. 2 is a diagram illustrating configurations of a network server and a mobile communication terminal according to exemplary embodiments of the present invention;

FIG. 3 is a diagram illustrating an example of a member database in a network server according to exemplary embodiments of the present invention;

FIG. 4, FIG. 5, and FIG. 6 are flowcharts illustrating a method for operating a network server according to exemplary embodiments of the present invention; and

FIG. 7 and FIG. 8 are flowcharts illustrating a method for operating a mobile communication terminal according to exemplary embodiments of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Hereinafter, as an example of a "small-sized base station", a femtocell may be given. By connecting the femtocell to a broadband router, the femtocell may be a small cellular base station and may enable voice and data transfer of a 3^{rd} generation (3G) technology and a 2^{nd} generation (2G) technology over a core network of a mobile communication company via a digital subscriber line (DSL) link and the like.

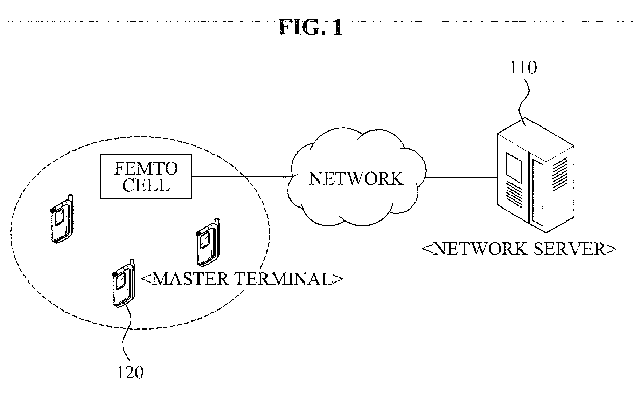

FIG. 1 is a diagram illustrating connections between a network server 110 and mobile communication terminals 120 entering a coverage area of a femtocell according to exemplary embodiments. Referring to FIG. 1, the network server 110 may verify whether the mobile communication terminal 120 entering the coverage area of the femtocell is a permanent closed subscriber group (CSG) member or a temporary CSG member.

When the mobile communication terminal 120 is verified as the temporary CSG member, the network server 110 may define and/or determine an expiration time corresponding to the mobile communication terminal 120, reduce an expiration time offered to the mobile communication terminal 120 according to the use thereof such that the mobile communication terminal 120 may temporarily utilize voice and/or data services of the network server 110 via the femtocell according to the expiration time. That is, the mobile communication terminal 120 may be provided with the voice and/or data services while there is some amount of time remaining in the expiration time that is being reduced over time.

When the expiration time is initially determined to be less than a first threshold time value, the network server 110 may offer an authority to enable the mobile communication terminal 120 to manage the expiration time.

Alternatively, when the expiration time is subsequently determined to exceed a second threshold time value, the second threshold time value being greater than the first threshold time value, the network server 110 may enable the mobile communication terminal 120 to report a remaining expiration time in a cycle while offering the authority to enable the mobile communication terminal 120 itself to manage the expiration time. In this instance, when the remaining expiration time reported in the cycle is determined to be less than the second threshold time value, the network server 110 may manage the reported remaining expiration time, after the reported remaining expiration time is managed by the mobile communication terminal 120.

The network server 110 may not always manage expiration times of all mobile communication terminals 120 verified to be the temporary CSG member, and may manage the expiration times only when the expiration time for a corresponding mobile communication terminal 120 is within a range (for example, being greater than or equal to the first threshold time value and being less than the second threshold time value).

Also, when the expiration time is outside the specific range (for example, being less than the first threshold time value or exceeding the second threshold time value) the network server 110 may offer the corresponding mobile communication terminal 120 the authority to manage its own expiration time, thereby reducing a network load.

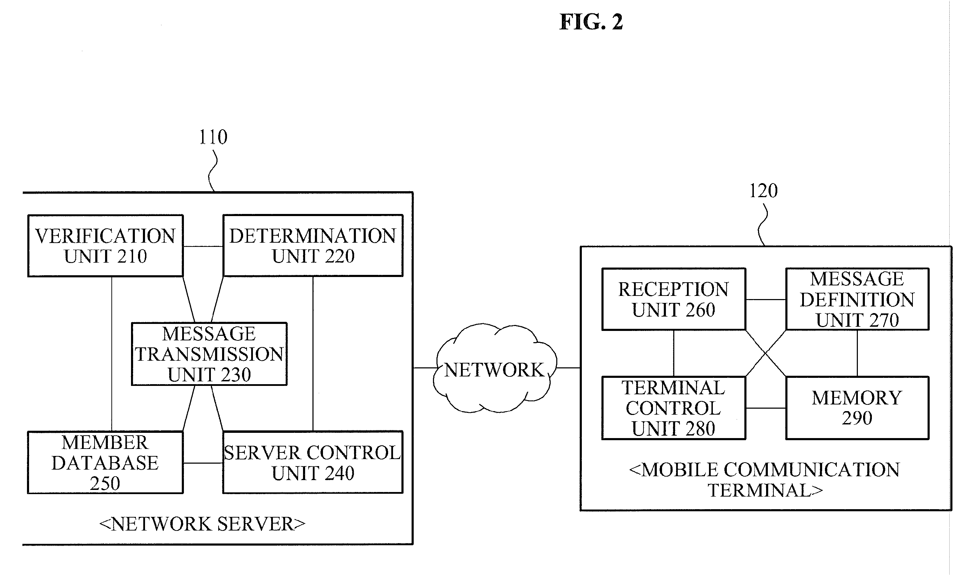

FIG. 2 is a diagram illustrating configurations of a network server 110 and a mobile communication terminal 120 according to exemplary embodiments of the present invention. Referring to FIG. 2, the network server 110 includes a verification unit 210, a determination unit 220, a message transmission unit 230, a server control unit 240, and a member database 250.

The verification unit 210 may verify an expiration time offered to the mobile communication terminal 120 if the mobile communication terminal 120 enters a coverage area of a small-sized base station and is a temporary CSG member.

Here, a mobile communication terminal 120 that may temporarily use voice and/or data services provided through the femtocell and may be offered an expiration time may be referred to as the temporary CSG member. In this instance, while the mobile communication terminal 120 is provided with the voice and/or data services, the offered expiration time may be reduced over time, and the network server 110 may terminate the voice and/or data services when the expiration time is zero.

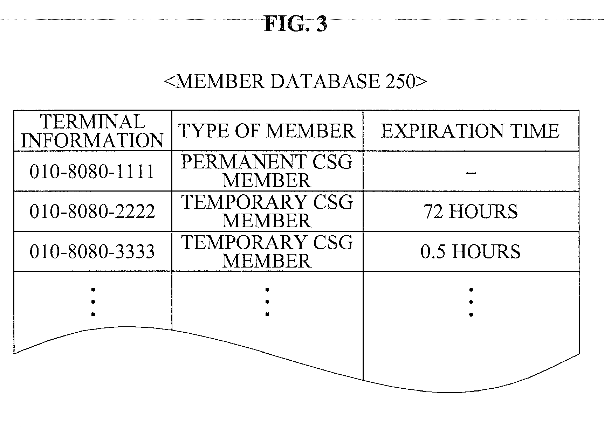

The verification unit 210 may verify the mobile communication terminal 120 as the temporary CSG member if terminal information of the mobile communication terminal 120 is included in the member database 250. Also, the verification unit 210 may verify the expiration time in the member database 250 offered to the mobile communication terminal 120, as illustrated in FIG. 3.

As an example, the determination unit 220 may determine the verified expiration time by comparing the verified expiration time with a first threshold time value. According to the determined result, when the expiration time is less than the first threshold time value, the message transmission unit 230 may transmit to the mobile communication terminal 120 a driving command message including the expiration time, so that a terminal timer of the mobile communication terminal 120 is driven to reduce the expiration time.

For example, when the expiration time is verified as '0.5 hours', the determination unit 220 may initially determine the expiration time to be less than the first threshold time value by comparing the expiration time with a first time of the first threshold time value. Also, the server control unit 240 may verify whether a driving of the terminal timer is possible according to the driving command message with respect to the mobile communication terminal 120. When the driving of the terminal timer is possible according to the verified result, the message transmission unit 230 may transmit to the mobile communication terminal 120 the driving command message including the expiration time of'0.5 hours'.

If the driving command message is received, the mobile communication terminal 120 may drive the terminal timer to reduce, over time, the expiration time of'0.5 hours' extracted from the driving command message. If the driving is not possible according to the verified result, the server control unit 240 may drive a server timer to reduce, over time, the expiration time of '0.5 hours'.

The server control unit 240 may receive a service completion signal transmitted from the mobile communication terminal 120, if the driving of the terminal timer is completed, and cancel a registration of the terminal information about the mobile communication terminal 120 from the member database 250. Also, the server control unit 240 may determine the mobile communication terminal 120 as being in an unusable state with respect to services related to the femtocell.

Thus, the network server 110 may offer the authority enabling the mobile communication terminal 120 to manage the expiration time, if the expiration time offered to the mobile communication terminal 120 is less than the first threshold time value.

As another example, the determination unit 220 may determine the verified expiration time by comparing the verified expiration time with the second threshold time value, the second threshold time value being greater than the first threshold time value. According to the determined result, if the expiration time exceeds the second threshold time value, the message transmission unit 230 may transmit to the mobile communication terminal 120 a report command message including the expiration time and a report cycle, drive the terminal timer of the mobile communication terminal 120 to reduce the expiration time, and receive the reduced expiration time from the mobile communication terminal 120 when the report cycle is repeated.

Also, the determination unit 220 may determine the reduced expiration time received from the mobile communication terminal 120 by comparing the reduced expiration time with the second threshold time value. If the reduced expiration time is determined to be less than the second threshold time value, the server control unit 240 may drive a server timer according to the reduced expiration time.

For example, when the expiration time is verified as '72 hours', the determination unit 220 may subsequently determine that the expiration time exceeds the second threshold time value, the second threshold time value being greater than the first threshold time value of 'one hour', by comparing the expiration time with a second threshold time value of 'two hours'. Also, the server control unit 240 may verify whether the driving of the terminal timer is possible in accordance with the report command message, with respect to the mobile communication terminal 120. When the driving of the terminal timer is possible according to the verified result, the message transmission unit 230 may transmit to the mobile communication terminal 120 the report command message including the expiration time '72 hours' and the report cycle '0.5 hours'.

If the report command message is received in the mobile communication terminal 120, the terminal timer may be driven to reduce, over time, the expiration time '72 hours' extracted from the report command message. Also, the mobile communication terminal 120 may drive a cycle timer together with the terminal timer, and deduct the report cycle '0.5 hours' from the expiration time '72 hours' when the report cycle '0.5 hours' extracted from the report command message is repeated, to thereby report the reduced expiration time to the network server 110.

For example, the mobile communication terminal 120 may repeatedly drive the cycle timer until the reduced expiration time becomes less than the second threshold time value, and repeatedly deduct the report cycle '0.5 hours' from the reduced expiration time whenever the report cycle '0.5 hours' is repeated, to thereby report the reduced expiration time to the network server 110. That is, when the reduced expiration time 'two hours' is less than the second threshold time value, the mobile communication terminal 120 may report the reduced expiration time 'two hours' to the network server 110, and complete the driving of the terminal timer and the cycle timer.

The determination unit 220 may subsequently determine the reduced expiration time 'two hours' received from the mobile communication terminal 120 by comparing the reduced expiration time 'two hours' with the second threshold time value 'two hours'. When the reduced expiration time is determined to be less than or equal to the second threshold time value according to the determined result, the server control unit 240 may drive a server timer to reduce the reduced expiration time 'two hours', after the driving of the terminal timer is completed.

Also, the server control unit 240 may cancel a registration of the terminal information of the mobile communication terminal 120 from the member database 250, when the driving of the server timer is completed, and determine the mobile communication terminal 120 as being in an unusable state with respect to services related to the femtocell.

That is, when the expiration time offered to the mobile communication terminal 120 exceeds the second threshold time value, the second threshold value being greater than the first threshold time value, the mobile communication terminal 120 may initially drive the terminal timer to manage the expiration time, and when the expiration time is within a specific range (for example, being greater than or equal to the first threshold time value and being less than or equal to the second threshold time value), the network server 110 may manage the remaining expiration time. Thus, even in a case of the expiration time being great, the expiration time may be managed.

As another example, the determination unit 220 may determine the verified expiration time by comparing the verified expiration time with the second threshold time value. According to the determined result, if the expiration time is greater than or equal to the first threshold time value and less than or equal to the second threshold time value, the server control unit 240 may drive the server timer to reduce the expiration time, and cancel the registration of the terminal information of the mobile communication terminal 120 from the member database 250 if the driving of the server timer is completed.

That is, the network server 110 may not always manage the expiration time of all of the mobile communication terminals 120 verified as the temporary CSG member, and may manage the expiration time by driving the server timer when the expiration time for a corresponding mobile communication terminal 120 is within the specific range (for example, being greater than or equal to the first threshold time value and being less than or equal to the second threshold time value).

In the network server 110, the expiration time offered to mobile communication terminals 120 being provided with voice and/or data services may be managed with a decreased network load using the femtocell. Also, in the network server, management of the expiration time may be dynamically changed by changing the threshold time values depending on a status of the network server.

Referring to FIG. 2, the mobile communication terminal 120 includes a reception unit 260, a message definition unit 270, a terminal control unit 280, and a memory 290.

The reception unit 260 may receive a message from the network server 110 in accordance with an entrance of the mobile communication terminal 120 into a coverage area of a femtocell.

The message definition unit 270 may verify that an expiration time is included in the received message to thereby define the message as a driving command message.

The terminal control unit 280 may extract the expiration time from the defined driving command message, and drive a terminal timer to reduce the extracted expiration time.

Also, the terminal control unit 280 may determine the mobile communication terminal 120 as being in a usable state with respect to services related to the femtocell while the terminal timer is driven. In this instance, when the driving of the terminal timer is completed, the terminal control unit 280 may send a service completion signal to the network server 110, and determine the mobile communication terminal 120 as being in the unusable state with respect to the service related to the femtocell.

Here, the terminal timer may be recorded in the memory 290. The memory 290 may be implemented by a universal subscriber identity module (USIM).

Also, the message definition unit 270 may verify that a report cycle is included in the received message to thereby define the message as a report command message.

The terminal control unit 280 may extract the report cycle from the defined report command message and transmit to the network server 110 an expiration time reduced when the report cycle is repeated. In this instance, the terminal control unit 280 may calculate a report frequency using the expiration time and the report cycle, and deduct the report frequency if the report cycle is repeated.

That is, the terminal control unit 280 may repeatedly report a remaining expiration time to the network server 110 whenever the report cycle is repeated until the report frequency becomes a reference value (for example, '1'), and deduct the report frequency. Also, the terminal control unit 280 may complete the driving of the terminal timer when the report frequency is reduced to be the reference value.

Next, the network server 110 may drive the server timer according to a finally reduced expiration time (for example, 'two hours'), after the driving of the terminal timer is completed. When the driving of the server timer is completed, the network server 110 may cancel a registration of terminal information of the mobile communication terminal 120 from the member database 250, and determine the mobile communication terminal 120 as being unusable with respect to the services related to the femtocell.

That is, if the expiration time offered to the mobile communication terminal 120 exceeds the second threshold time value, which is greater than the first threshold time value, the mobile communication terminal 120 may initially drive the terminal timer to manage the expiration time, and then the network server 110 may manage a remaining expiration time starting from a point in time when the expiration time is determined to be within the specific range, thereby decreasing a network load while managing the expiration time.

FIG. 3 is a diagram illustrating an example of a member database in a network server 110 according to an exemplary embodiment of the present invention. Referring to FIG. 3, the network server 110 may record terminal information of the mobile communication terminals 120 being provided with voice and/or data services through the femtocell in the member database 250.

Also, the member database 250 may include information about a type of a subscriber of the mobile communication terminals 120 or information about an expiration time of the mobile communication terminals 120 as well as the terminal information.

The terminal information may include a phone number, a serial number, and the like of the mobile communication terminal 120. Also, the type of the subscriber may include information about whether the mobile communication terminal 120 is a temporary CSG member having an expiration time or a permanent CSG member not having the expiration time. Also, the expiration time may have various time values.

The expiration time may be offered by a master terminal among the mobile communication terminals 120 of which the terminal information is recorded in the member database 250 or may be offered by the network server 110. Alternatively, the expiration time may be offered by a mobile communication terminal 120 of which registration in the member database 250 is requested.

The verification unit 210 may verify that the mobile communication terminal 120 is the temporary CSG member if the terminal information of the mobile communication terminal 120 entering a coverage area of the femtocell is included in the member database 250. Also, the verification unit 210 may verify the expiration time in the member database 250 offered to the mobile communication terminal 120.

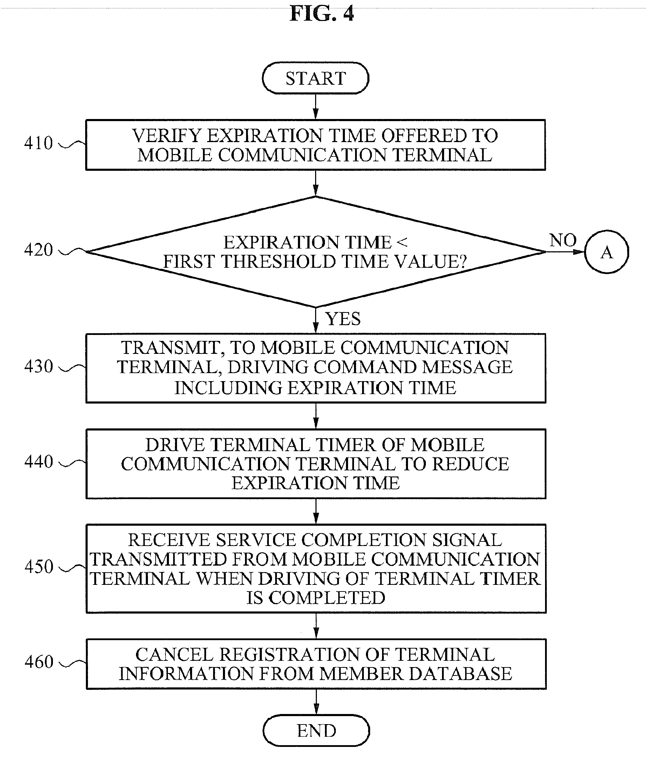

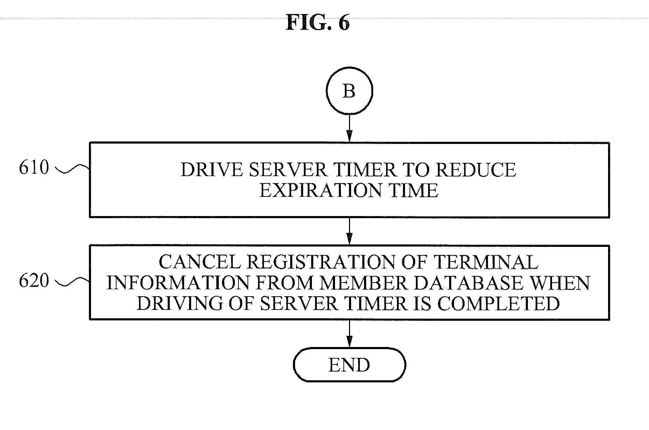

FIG. 4, FIG. 5, and FIG. 6 are flowcharts illustrating a method for operating a network server according to an exemplary embodiment of the present invention. The method for operating the network server may be implemented by the network server 110 of FIG. 2. Hereinafter, FIG. 4, FIG. 5, and FIG. 6 will be described in detail with reference to FIG. 2.

In operation 410, the network server 110 may verify whether a mobile communication terminal 120 entering a coverage area of a small-sized base station (hereinafter referred to as "femtocell") is a temporary CSG member, and verify an expiration time offered to the mobile communication terminal 120 if the mobile communication terminal 120 is the temporary CSG member.

The network server 110 may record terminal information of a mobile communication terminal 120 being provided with voice and/or data services through the femtocell, a type of a subscriber of the mobile communication terminal 120, or information about the expiration time in the member database 250 as shown in FIG. 3.

The verification unit 210 may verify that the mobile communication terminal 120 is the temporary CSG if the terminal information of the mobile communication terminal 120 entering a coverage area of the femtocell is included in the member database 250. Also, the verification unit 210 may verify the expiration time in the member database 250 offered to the mobile communication terminal 120.

In operation 420, the network server 110 may determine whether the verified expiration time is less than a first threshold time value. For example, if the expiration time is determined as '0.5 hours', the determination unit 220 may determine the expiration time to be less than the first threshold time value of 'one hour' by comparing the expiration time with the first threshold time value of 'one hour'.

In operation 430, when the expiration time is less than the first threshold time value according to the determined result of operation 420, the network server 110 may transmit to the mobile communication terminal 120 a driving command message including the expiration time.

The server control unit 240 may verify whether a driving of a terminal timer of the mobile communication terminal 120 is possible according to the driving command message. If the driving of the terminal timer is possible according to the verified result, the message transmission unit 230 may transmit to the mobile communication terminal 120 the driving command message including the expiration time of, for example,'0:5 hours'.

In operation 440, the mobile communication terminal 120 in which the driving command message is received may drive the terminal timer of the mobile communication terminal 120 to reduce the expiration time.

That is, the mobile communication terminal 120 may drive the terminal timer to reduce over time the expiration time of '0.5 hours' extracted from the driving command message. If the driving of the terminal timer is not possible according to the verified result by the server control unit 240, the server control unit 240 may drive a server timer to reduce the expiration time of'0.5 hours' over time.

In operation 450 and operation 460, the network server 110 may receive from the mobile communication terminal 120 a service completion signal when the driving of the terminal timer is completed, and cancel a registration of the terminal information of the mobile communication terminal 120 from the member database 250.

Also, the server control unit 240 may determine the mobile communication terminal 120 to be unusable with respect to services related to the femtocell. That is, if the expiration time offered to the mobile communication terminal 120 is less than the first threshold time value, the network server 110 may offer an authority enabling the mobile communication terminal 120 to manage the expiration time.

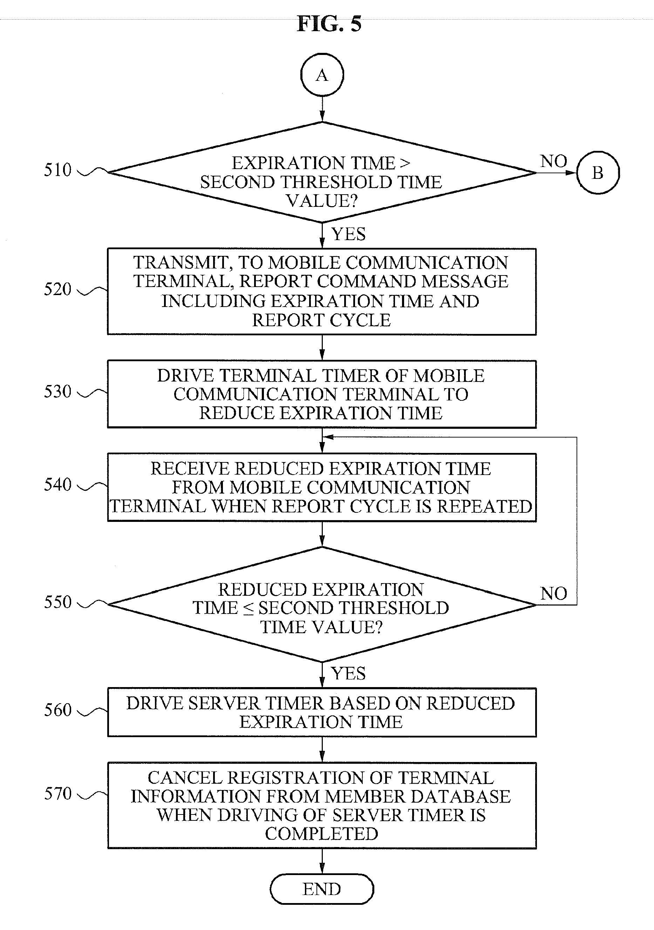

As shown in FIG. 5, in operation 510, if the expiration time is not less than the first threshold time value according to the determined result of operation 420, the network server 110 may determine whether the expiration time exceeds a second threshold time value, the second threshold time value being greater than the first threshold time value. For example, if the expiration time is verified as '72 hours', the determination unit 220 may subsequently determine that the expiration time exceeds the second threshold time value by comparing the expiration time with the second threshold time value of 'two hours' being greater than the first threshold time value of'one hour'.

In operation 520, if the expiration time exceeds the second threshold time value according to the determined result of operation 510, the network server 110 may transmit to the mobile communication terminal 120 a report command message including the expiration time and a report cycle.

The server control unit 240 may verify whether a driving of a terminal timer of the mobile communication terminal 120 is possible according to the report command message. If the driving of the terminal timer is possible according to the verified result, the message transmission unit 230 may transmit to the mobile communication terminal 120 the report command message including the expiration time of, for example, '72 hours' and the report cycle of, for example, '0.5 hours'.

In operation 530, the mobile communication terminal 120 in which the report command message is received may drive the terminal timer of the mobile communication terminal 120 to reduce the expiration time. That is, the mobile communication terminal 120 may reduce over time the expiration time of '72 hours' extracted from the report command message by driving the terminal timer.

In operation 540, the network server 110 may receive from the mobile communication terminal 120 the reduced expiration time if the report cycle is repeated. For example, the mobile communication terminal 120 may drive a cycle timer together with the terminal timer. When the report cycle of '0.5 hours' extracted from the report command message is repeated, the mobile communication terminal 120 may deduct the report cycle of '0.5 hours' from the expiration time of '72 hours' to report the reduced expiration time to the network server 110. That is, the network server 110 may receive the reduced expiration time transmitted from the mobile communication terminal 120 whenever the report recycle is repeated.

In operation 550, the network server 110 may determine whether the reduced expiration time received from the mobile communication terminal 120 is less than or equal to the second threshold time value.

If the expiration time is not less than or equal to the second threshold time value according to the determined result of operation 550, the mobile communication terminal 120 may repeatedly drive the cycle timer until the reduced expiration time is reduced to be less than or equal to the second threshold time value of 'two hours', and may repeatedly deduct the report cycle of'0.5 hours' from the reduced expiration time whenever the report cycle of '0.5 hours' is repeated to thereby report the repeatedly reduced expiration time to the network server 110. That is, the network server 110 may receive the reduced expiration time transmitted from the mobile communication terminal 120 whenever the report cycle is repeated.

In operation 560, if the expiration time is less than or equal to the second threshold time value according to the determined result of operation 550, the network server 110 may drive a server timer according to the reduced expiration time.

The determination unit 220 may subsequently determine the reduced expiration time of 'two hours' received from the mobile communication terminal 120 by comparing the reduced expiration time with the second threshold time value of'two hours'. If the reduced expiration time is less than or equal to the second threshold time value according to the determined result, the server control unit 240 may drive the server timer to reduce the reduced expiration time of 'two hours' after the driving of the terminal timer is completed. For example, if the reduced expiration time of 'two hours' becomes less than or equal to the second threshold time value, the network server 110 may complete the driving of the server timer.

In operation 570, if the driving of the server timer is completed, the network server 110 may cancel a registration of the terminal information of the mobile communication terminal 120 from the member database 250.

Also, the server control unit 240 may determine the mobile communication terminal 120 to be unusable with respect to services related to the femtocell. That is, if the expiration time offered to the mobile communication terminal 120 exceeds the second threshold time value, which is greater than the first threshold time value, the mobile communication terminal 120 may initially drive the terminal timer to manage the expiration time, and then, if the expiration time is within a specific range, the network server 110 may manage a remaining expiration time. As a result, even when the expiration time is great, the expiration time may be managed.

In operation 610, when the expiration time does not exceed the second threshold time value according to the determined result of operation 510, that is, when the expiration time is determined to be greater than or equal to the first threshold time value and less than or equal to the second threshold time value, the network server 110 may drive the server timer to deduct the expiration time.

In operation 620, the network server 110 may cancel a registration of terminal information about the mobile communication terminal 120 from the member database 250 when the driving of the server timer is completed. That is, the network server 110 may not always manage the expiration time of all of the mobile communication terminals 120 verified as the temporary CSG members, and may drive the server timer to manage the expiration time if the expiration time for a corresponding mobile communication terminals 120 is within the specific range (for example, being greater than or equal to the first threshold time value and less than or equal to the second threshold time value).

Thus, the network server 110 may manage the expiration time offered mobile communication terminals 120 that are provided with data services using a femtocell with a decreased network load.

Also, the network server 110 may dynamically change a condition regarding management of the expiration time by changing the threshold time value depending on a status of the network server 110.

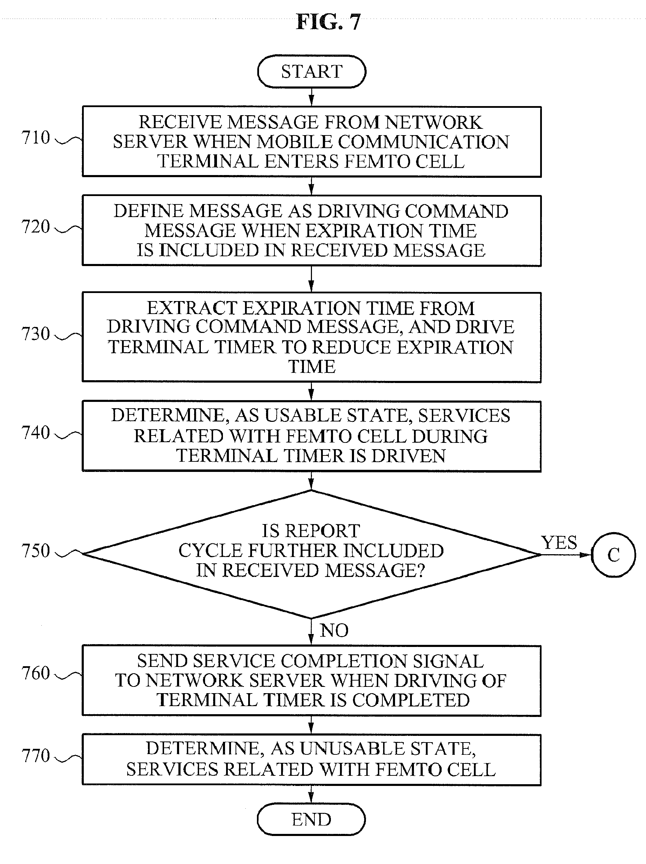

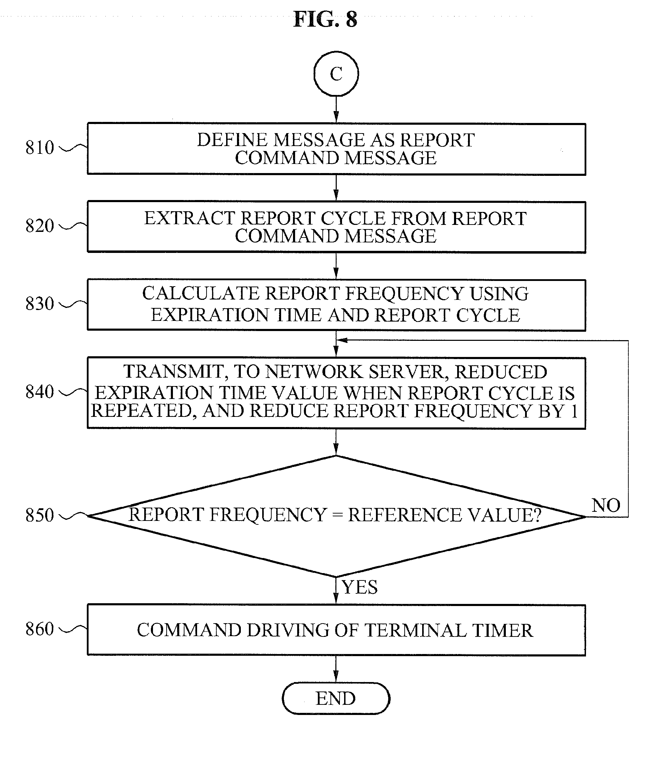

FIG. 7 and FIG. 8 are flowcharts illustrating a method for operating a mobile communication terminal according to an exemplary embodiment of the present invention. The method for operating the mobile communication terminal may be implemented by the mobile communication terminal 120 of FIG. 2. Hereinafter, FIG. 7 and FIG. 8 will be described in detail with reference to FIG. 2.

In operation 710, the mobile communication terminal 120 may receive a message from the network server 110 in accordance with an entrance of the mobile communication terminal 120 to a coverage area of the femtocell.

In operation 720, the mobile communication terminal 120 may verify that an expiration time is included in the received message and may define the message as a driving command message.

In operation 730, the mobile communication terminal 120 may extract the expiration time from the defined driving command message and drive a terminal timer to reduce the extracted expiration time. Here, the terminal timer may be recorded in the memory 290. The memory 290 may be implemented by a universal subscriber identity module (USIM).

In operation 740, the mobile communication terminal 120 may determine the mobile communication terminal 120 to be in a usable state with respect to services related to the femtocell while the terminal timer is driven.

In operation 750, the mobile communication terminal 120 may determine whether the report cycle is included in the received message.

In operation 760, if the report cycle is not included in the received message according to the determined result of operation 750, the mobile communication terminal 120 may send a service completion signal to the network server 110 if the driving of the terminal timer is completed.

In operation 770, the mobile communication terminal 120 may determine the mobile communication terminal 120 to be in an unusable state with respect to the services related to the femtocell. That is, the mobile communication terminal 120 may drive the terminal timer to manage the expiration time.

In operation 810, if the report cycle is included in the received message according to the determined result of operation 750, the mobile communication terminal 120 may define the received message as a report command message.

In operation 820, the mobile communication terminal 120 may extract the report cycle from the defined report command message.

In operation 830, the mobile communication terminal 120 may calculate a report frequency using the expiration time and the report cycle. For example, the terminal control unit 280 of the mobile communication terminal 120 may divide the expiration time of'72 hours' by the report cycle of '0.5 hours' to calculate the report frequency as '144'. Thus, the report cycle may be determined by the network server 110, and the report frequency may be adjusted.

In operation 840, the mobile communication terminal 120 may transmit, to the network server 110, the reduced expiration time if the report cycle is repeated and may deduct the calculated report frequency. For example, the terminal control unit 280 may drive a cycle timer as well as the terminal timer according to the report cycle of'0.5 hours'. The terminal control unit 280 of the mobile communication terminal 120 may deduct the report cycle from the expiration time of'72 hours' if the report cycle of '0.5 hours' is repeated, report the reduced expiration time to the network server 110, and reduce the report frequency to update the reduced report frequency as '143 times'.

In operation 850, the mobile communication terminal 120 may determine whether the reduced report frequency is a reference value (for example, '1').

If the reduced report frequency is not the reference value according to the determined result of operation 850, that is, when the reduced report frequency is greater than the reference value, the mobile communication terminal 120 may continue to operation 840. That is, the terminal control unit 280 of the mobile communication terminal 120 may repeatedly report to the network server 110 the reduced expiration time if the report cycle is repeated, i.e., a remaining expiration time, and reduce the report frequency if the expiration time is reported to the network server 110.

In operation 860, when the reduced report frequency is the reference value according to the determined result of operation 850, the mobile communication terminal 120 may complete the driving of the terminal timer.

Next, the network server 110 may drive a server timer according to the reduced expiration time (for example, 'two hours'), after the driving of the terminal timer is completed. If the driving of the server timer is completed, the network server 110 may cancel a registration of the terminal information of the mobile communication terminal 120 from the member database 250, and determine the mobile communication terminal 120 to be in an unusable state with respect to the services related to the femtocell.

As described above, according to exemplary embodiments of the present invention, if the expiration time offered to the mobile communication terminal 120 exceeds the second threshold time value, which is greater than the first threshold time value, the mobile communication terminal 120 may drive the terminal timer of the mobile communication terminal 120 to manage the expiration time, and then if the expiration time is within a specific range, the network server 110 may manage the remaining expiration time, whereby the expiration time may be managed while reducing a network load.

According to exemplary embodiments of the present invention, the expiration time offered to a plurality of mobile communication terminals 120 being provided with voice and/or data services using the femtocell may be managed with a decreased network load.

The method according to exemplary embodiments of the present invention may be recorded in computer-readable media including program commands to implement various operations embodied by a computer. The media may also include, alone or in combination with the program commands, data files, data structures, and the like. Examples of computer-readable media include magnetic media, such as hard disks, floppy disks, and magnetic tape; optical media, such as CD-ROM disks and DVDs; magneto-optical media such as optical disks; and hardware devices that are configured to store and perform program commands, such as read-only memory (ROM), random access memory (RAM), flash memory, and the like. Examples of program commands include both machine code, such as produced by a compiler, and files containing higher level code that may be executed by the computer using an interpreter. The described hardware devices may be configured to act as one or more software modules in order to perform the operations of the exemplary embodiments of the present invention, or vice versa.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A mobile communication terminal may include a reception unit to receive a message from a network server in accordance with an entrance of the mobile communication terminal to coverage area of a small-sized base station, a message definition unit to verify that an expiration time is included in the received message defining the message as a driving command message, and a terminal control unit to extract the expiration time from the defined driving command message and to drive a terminal timer to reduce the extracted expiration time.

## Claims

1. A network server, comprising:
a verification unit to determine if a mobile communication terminal entering a coverage area of a small-sized base station is a temporary closed subscriber group (CSG) member, and to verify an expiration time offered to the mobile communication terminal if the mobile communication terminal is the temporary CSG member;
a determination unit to compare the expiration time to a first threshold time value; and
a message transmission unit to transmit to the mobile communication terminal a driving command message including the expiration time if the expiration time is less than the first threshold time value to drive a terminal timer of the mobile communication terminal to reduce the expiration time.

2. The network server of claim 1, further comprising:
a server control unit to receive a service completion signal from the mobile communication terminal, and to cancel a registration of terminal information of the mobile communication terminal from a member database if the driving of the terminal timer is completed.

3. The network server of claim 1 or 2, further comprising:
a server control unit to determine if the driving of the terminal timer of the mobile communication terminal is possible according to the driving command message and
to drive a server timer to reduce the expiration time if the driving of the terminal timer of the mobile communication terminal is not possible.

4. The network server of any of claims 1 to 3, wherein:
the determination unit compares the verified expiration time to a second threshold time value, the second threshold time value being greater than the first threshold time value, and
if the expiration time exceeds the second threshold time value, the message transmission unit transmits to the mobile communication terminal a report command message including the expiration time and a report cycle to drive the terminal timer of the mobile communication terminal to reduce the expiration time,
and the message transmission unit receives the reduced expiration time transmitted from the mobile communication terminal if the report cycle is repeated.

5. The network server of claim 4, further comprising:
a server control unit to drive a server timer according to the reduced expiration time,
wherein the server control unit drives the server timer if the reduced expiration time received from the mobile communication terminal is less than the second threshold time value.

6. The network server of claim 4 or 5, further comprising:
a server control unit to drive a server timer to reduce the expiration time,
wherein the server control unit drives the server timer if the verified expiration time is greater than or equal to the first threshold time value and less than or equal to the second threshold time value.

7. The network server of any of claims 1 to 6, further comprising:
a server control unit to cancel a registration of terminal information of the mobile communication terminal upon the expiration of the reduced expiration time.

8. A network server according to any of claims 1 to 7, wherein the message transmission unit furthermore transmits to the mobile communication terminal a report command message including the expiration time and a report cycle if the expiration time exceeds the threshold time value to drive a terminal timer of the mobile communication terminal to reduce the expiration time, and receives the reduced expiration time transmitted from the mobile communication terminal.

9. The network server of claim 8, further comprising:
a server control unit to drive a server timer according to the reduced expiration time,
wherein the server control unit drives the server timer if the reduced expiration time received from the mobile communication terminal is determined to be less than or equal to the threshold time value by the determination unit.

10. A mobile communication terminal, comprising:
a reception unit to receive a message from a network server in accordance with an entrance of the mobile communication terminal into a coverage area of a small-sized base station connected to the network server;
a message definition unit to define the message as a driving command message if an expiration time is included in the received message; and
a terminal control unit to extract the expiration time from the defmed driving command message, and to drive a terminal timer to reduce the extracted expiration time.

11. The mobile communication terminal of claim 10, wherein the terminal control unit determines the mobile communication terminal to be in a usable state with respect to services related to the small-sized base station if the terminal timer is driven, sends a service completion signal to the network server if the driving of the terminal timer is completed, and determines the mobile communication terminal to be in an unusable state with respect to services related to a femtocell if the driving of the terminal timer is completed.

12. The mobile communication terminal of claim 11, wherein:
the message definition unit verifies that a report cycle is included in the received message defining the message as a report command message, and
the terminal control unit extracts the report cycle from the defined report command message, and transmits to the network server the reduced expiration time if the report cycle expires.

13. The mobile communication terminal of claim 12, wherein the terminal control unit calculates a report frequency according to the expiration time and the report cycle, reduces the report frequency if the report cycle is completed, and completes the driving of the terminal timer if the report frequency is reduced to a reference value.

14. A method for operating a network server, the method comprising:
verifying if a mobile communication terminal entering a coverage area of a small-sized base station is a temporary closed subscriber group (CSG) member, and
verifying an expiration time offered to the mobile communication terminal if the mobile communication terminal is the temporary CSG member;
comparing the expiration time with a first threshold time value; and
transmitting to the mobile communication terminal a driving command message including the expiration time if the expiration time is less than the first threshold time value to drive a terminal timer of the mobile communication terminal to reduce the expiration time.

15. A method for operating a mobile communication terminal, the method comprising:
receiving a message from a network server in accordance with an entrance of the mobile communication terminal into a coverage area of a small-sized base station connected to the network server;
defining the received message as a driving command message if an expiration time is included in the received message;
extracting the expiration time from the defined driving command message; and
driving a terminal timer of the mobile communication terminal to reduce the extracted expiration time.
